# FASCICULE DE BREVET EUROPEEN

(11) **EP 1 669 222 B1**
(45) Date de publication et mention de la délivrance du brevet: **12.11.2008**
(21) Numéro de dépôt: 05026451.4
(22) Date de dépôt: 05.12.2005
(51) Int. Cl.: B60C 23/04

(54) **Procédé et dispositif de détermination de l'état de déplacement d'un véhicule**
Verfahren und Vorrichtung zur Bestimmung des Bewegungszustands eines Fahrzeugs
Method and device for determining the state of displacement of a vehicle

(30) Priorité: 10.12.2004 FR 0413174
(43) Date de publication de la demande: 14.06.2006
(73) Titulaire: Continental Automotive France, 31100 Toulouse (FR)
(72) Inventeur: Dulac, Gilles, 31270 Villeneuve Tolosane (FR)
(74) Mandataire: Bonn, Roman Klemens

(56) Documents cités:
- EP-A- 1 481 823
- GB-A- 2 344 232
- US-B1- 6 230 556

## Description

L'invention concerne un procédé et un dispositif de détermination de l'état de déplacement, à l'arrêt ou en roulage, d'un véhicule et plus particulièrement un procédé et un dispositif de localisation de la position droite ou gauche d'une roue de véhicule.

De plus en plus de véhicules automobiles possèdent des systèmes de surveillance et/ou de mesures de paramètres comportant des capteurs montés sur le dit véhicule.

A titre d'exemple concernant de tels systèmes, il peut être cité les systèmes de surveillance comportant des capteurs montés sur chacune des roues de véhicules, dédiés à la mesure de paramètres, tels que pression et/ou température des pneumatiques équipant ces roues, et destinés à informer le conducteur de toute variation anormale du paramètre mesuré.

Ces systèmes de surveillance comportent classiquement :
- monté sur chacune des roues du véhicule, un boîtier intégrant un capteur de mesure, un microprocesseur et un émetteur radiofréquence,
- et, montée sur le véhicule, une unité centrale de réception des signaux émis par les émetteurs, dotée d'un calculateur intégrant un récepteur radiofréquence connecté à une antenne.

De plus, de façon usuelle, ces systèmes de surveillance comportent un capteur de déplacement adapté pour être embarqué avec le capteur de mesure, et destiné à fournir une information représentative de l'état de déplacement du véhicule (arrêt ou roulage).

Une telle information permet d'instaurer deux modes de fonctionnement des systèmes de surveillance se différenciant par la fréquence d'émission des signaux issus des capteurs de mesure en direction de l'unité centrale, et programmés de façon que cette fréquence d'émission soit réduite dans le mode de fonctionnement correspondant à l'état arrêté du véhicule.

Cette gestion de la fréquence d'émission des signaux issus des capteurs de mesure conduit, en effet, lorsque le véhicule est à l'arrêt, à réduire, d'une part, la consommation des piles alimentant les microprocesseurs embarqués, et d'autre part, la « pollution » du milieu environnant le véhicule, et par conséquent, notamment, les risques d'interférences parasites entre véhicules voisins.

Les capteurs de déplacement classiquement utilisés aux fins précitées consistent soit en des capteurs de rotation (connus de façon usuelle sous l'appellation «roll switch »), soit en des accéléromètres constitués de jauges de contrainte du type poutres déformables.

Toutefois de tels capteurs présentent en commun deux inconvénients majeurs résidant, d'une part, en terme de coût, dans leur prix de revient élevé, et d'autre part, en terme de performance, dans l'obtention d'une détermination très approximative de la valeur « frontière » entre les états arrêtés et de roulage, qui impose de choisir un seuil de roulage élevé, de l'ordre de 40 Km / h.

La présente invention vise à pallier ces inconvénients et a pour objectif de fournir un procédé et un dispositif permettant de déterminer l'état de déplacement, à l'arrêt ou en roulage, d'un véhicule sans requérir de capteur de déplacement classique, et donc dépourvus des inconvénients liés à la présence des dits capteurs.

De plus, l'objectif de l'invention est de fournir un procédé de détection rapide et précise des changements d'état de déplacement d'un véhicule.

Enfin, l'objectif de l'invention est de fournir un procédé de localisation droite/gauche d'une roue de véhicule très performant en terme de réactivité, nécessitant en outre, en vue de sa mise en oeuvre, un matériel d'un faible prix de revient global et d'installation.

A cet effet, l'invention vise, un procédé de détermination de l'état de déplacement, à l'arrêt ou en roulage, d'un véhicule, tel que revendiqué dans les revendications à suivre.

Un principe de l'invention est d'équiper au moins une des roues des véhicules d'un capteur magnétique, de mesurer les variations du champ magnétique « vu » par le dit capteur magnétique, et d'assimiler :
- l'absence de variations du champ magnétique à une absence de rotation de la roue, et par conséquent à un état à l'arrêt du véhicule,
- et une variation cyclique du champ magnétique à une rotation de la roue, et donc à un état de roulage du véhicule.

En effet, un capteur magnétique monté sur une roue de véhicule détecte les variations du champ magnétique global régnant autour de ce véhicule, composé du champ magnétique terrestre additionné du champ magnétique environnemental pouvant notamment résulter de la présence d'équipements électriques ou magnétiques embarqués dans le véhicule.

Or, en l'absence de rotation de la roue, ce champ magnétique global « vu » par le capteur magnétique est sensiblement constant, d'où une absence de variations du signal aux bornes du dit capteur magnétique. Par contre, lors de la rotation de la roue, le capteur magnétique se déplace selon une trajectoire circulaire de sorte que ce capteur détecte un champ magnétique variable et que le signal mesuré aux bornes du dit capteur présente des variations cycliques correspondantes et ceci dés la mise en rotation de la roue.

Selon ce principe, l'invention conduit à une discrimination très rapide et précise entre les deux états de déplacement des véhicules, du fait que cette discrimination ne dépend de façon principale que de la sensibilité des moyens de mesure de l'amplitude des variations du signal aux bornes du capteur magnétique et non de la vitesse de rotation de la roue.

En outre, en vue d'augmenter cette sensibilité, et de façon avantageuse, on amplifie et on met en forme le signal cyclique représentatif des variations des valeurs du champ magnétique détectées par le capteur magnétique, de façon à obtenir un signal périodique de forme carrée lors des déplacements du véhicule.

Dans la même optique d'augmenter la sensibilité et donc la fiabilité du procédé selon l'invention, on équipe avantageusement le véhicule d'un aimant fixe par rapport à chaque roue équipée d'un capteur magnétique, le dit aimant étant positionné et présentant une puissance adaptée pour générer un champ magnétique couvrant une zone traversée par le dit capteur magnétique lors de la rotation de la dite roue.

Par ailleurs, moyennant une simple adaptation logicielle, le procédé selon l'invention permet également de fournir des informations sur la vitesse de rotation de la roue et donc la vitesse de déplacement du véhicule. A cet effet et de façon avantageuse, lors des déplacements du véhicule, on mesure la période du signal cyclique représentatif des variations des valeurs du champ magnétique détectées par le capteur magnétique, et on utilise cette donnée pour le calcul de la vitesse de rotation de la roue équipée du dit capteur magnétique.

Il est à noter, en outre, que le procédé selon l'invention ne nécessite principalement, en vue de sa mise en oeuvre, qu'un simple capteur magnétique en lieu et place des capteurs de déplacement actuels.

Cet avantage procuré par l'invention peut en outre, s'avérer encore plus déterminant lors de la mise en oeuvre du procédé sur un véhicule doté de roues équipées d'un boîtier électronique de surveillance et/ou de mesure d'un paramètre, intégrant une antenne basse fréquence constituée d'une inductance. En effet, on peut alors avantageusement délivrer les informations de l'état de déplacement du véhicule à partir de mesures du signal aux bornes de l'inductance formant antenne. Cette inductance présente alors une double fonction à savoir:
- une fonction d'antenne et,
- une fonction de capteur magnétique.

L'invention fournit un procédé de localisation de la position droite ou gauche d'une roue de véhicule. A cet effet, selon l'invention :
- on équipe la roue d'un second capteur magnétique, le dit second capteur magnétique et le premier capteur magnétique étant positionnés de façon que leurs axes de sensibilité maximale s'étendent dans un plan sécant par rapport à l'axe de rotation de la roue, et soient décalés l'un par rapport à l'autre, dans ce plan sécant, d'un angle prédéterminé θ,
- et, lors des déplacements du véhicule selon un sens de déplacement donné :
   • on mesure le signal généré par la variation du champ magnétique aux bornes de chacun des deux capteurs magnétiques, de façon à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue,
   • on mesure le signal généré par la variation du champ magnétique aux bornes de chacun des deux capteurs magnétiques, de façon à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue,

Le procédé de localisation a donc consisté à équiper chaque roue à localiser d'un véhicule de deux capteurs magnétiques disposés de façon que les signaux aux bornes des dits capteurs soient déphasés l'un par rapport à l'autre, et à déduire de ce déphasage le sens de rotation et la localisation droite/gauche de la roue.

Selon ce principe, l'invention conduit à une localisation très rapide de la position droite/gauche d'une roue, obtenue, en effet, après quelques tours de roue. De plus, le prix de revient global (coût et installation) de deux capteurs magnétiques est relativement faible et, notamment, inférieur à celui d'une antenne ou à celui d'un accéléromètre.

De plus, en vue d'obtenir deux signaux facilement discriminables, et selon un mode de mise en oeuvre avantageux de l'invention, on positionne les deux capteurs magnétiques de façon que leurs axes de sensibilité maximale s'étendent orthogonalement l'un par rapport à l'autre, dans un plan orthogonal par rapport à l'axe de rotation de la roue.

Par ailleurs, lorsque la roue est équipée de deux capteurs magnétiques, et de façon avantageuse selon l'invention, on détermine l'état de déplacement du véhicule en mesurant alternativement, pendant des périodes de temps prédéterminées, le signal aux bornes soit du premier capteur magnétique soit du second capteur magnétique.

Une telle alternance a un objectif sécuritaire du fait que la fonction de détermination du déplacement d'un véhicule est assurée, selon l'invention, même lors d'une défaillance d'un des deux capteurs magnétiques.

L'invention s'étend à un dispositif de détermination de l'état de déplacement, à l'arrêt ou en roulage, d'un véhicule tel que revendiqué.

De plus, de façon avantageuse, l'unité de calcul est programmée, lors des déplacements du véhicule, pour mesurer la période du signal cyclique délivré par les moyens de mesure, et pour calculer, à partir de cette donnée, la vitesse de rotation de la roue équipée du capteur magnétique.

En outre, les moyens de mesure comprennent avantageusement des moyens d'amplification, et des moyens de mise en forme du signal amplifié aptes à le transformer en un signal périodique de forme carrée lors des déplacements du véhicule.

Ce dispositif comprend également, avantageusement un aimant monté fixe sur le véhicule par rapport à chaque roue équipée d'un capteur magnétique, le dit aimant étant positionné et présentant une puissance adaptée pour générer un champ magnétique couvrant une zone traversée par le dit capteur magnétique lors de la rotation de la dite roue.

Un tel dispositif est par ailleurs particulièrement destiné à des véhicules dotés de roues équipées d'un boîtier électronique de surveillance et/ou de mesure d'un paramètre, intégrant une antenne basse fréquence constituée d'une inductance. Dans ce cas, et de façon avantageuse, les moyens de mesure sont disposés de façon à mesurer un signal aux bornes de l'inductance formant également antenne.

Le dispositif selon l'invention permet de localiser la position droite ou gauche d'une roue de véhicule. A cet effet, et en premier lieu, il comprend, monté sur la roue, un second capteur magnétique, le dit second capteur magnétique et le premier capteur magnétique étant positionnés de façon que leurs axes de sensibilité maximale s'étendent dans un plan sécant par rapport à l'axe de rotation de la roue, et soient décalés l'un par rapport à l'autre, dans ce plan sécant, d'un angle prédéterminé θ. De plus, et de façon avantageuse selon l'invention,
• les moyens de mesure sont alors disposés aux bornes de chacun des deux capteurs magnétiques, de façon à délivrer, lors des déplacements du véhicule, deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue,
• et l'unité de calcul est alors programmée pour déterminer, à partir du déphasage entre les deux signaux périodiques, le sens de rotation de la roue, et pour déduire de ce sens de rotation et du sens de déplacement du véhicule, la localisation (position droite ou gauche) de la roue.

De plus, en vue d'obtenir deux signaux facilement discriminables, les deux capteurs magnétiques sont avantageusement positionnés de façon que leurs axes de sensibilité maximale s'étendent orthogonalement l'un par rapport à l'autre, dans un plan orthogonal par rapport à l'axe de rotation de la roue.

D'autres caractéristiques buts et avantages de l'invention ressortiront de la description détaillée qui suit en référence aux dessins annexés qui en représentent à titre d'exemples non limitatifs deux modes de réalisation préférentiels. Sur ces dessins :
- la figure 1 est une vue en perspective partielle et schématique d'un véhicule équipé d'un dispositif connu de détermination de l'état de déplacement d'un véhicule,
- la figure 2 est un schéma synoptique fonctionnel de l'électronique de traitement de ce dispositif,
- les figures 3a à 3c consistent en trois graphiques représentant l'évolution du signal mesuré lors de son traitement par l'électronique du dispositif connu,
- la figure 4 est une vue en perspective partielle et schématique d'un véhicule équipé d'un dispositif selon l'invention permettant, la localisation d'une roue de véhicule,
- la figure 4a est un schéma de détail représentant la disposition relative des deux capteurs magnétiques du dispositif selon l'invention représenté à la figure 4,
- et les figures 5a et 5b sont deux schémas illustratifs du principe du procédé de localisation mis en oeuvre au moyen du dispositif selon l'invention représenté à la figure 4.

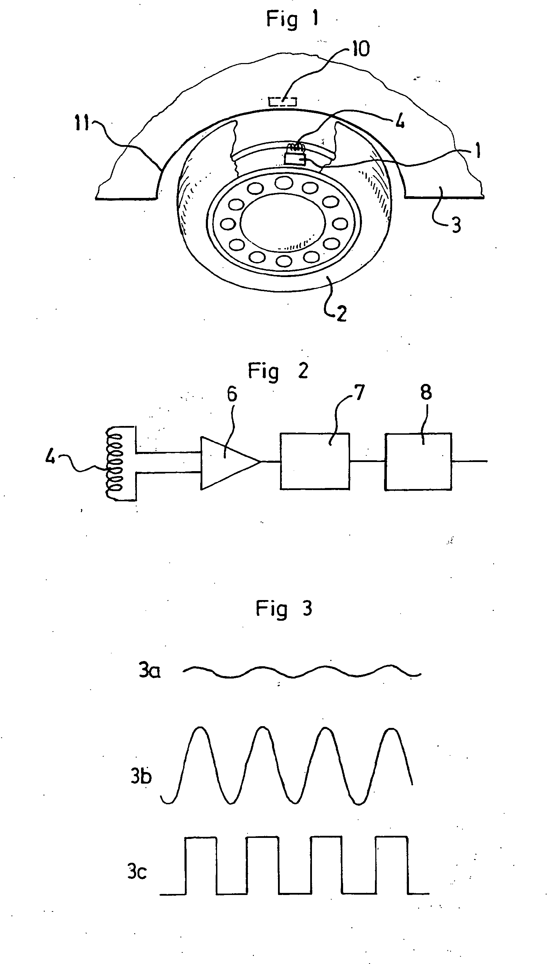

Le dispositif connu représenté à titre d'exemple à la figure 1 est adapté pour détecter la rotation d'une roue d'un véhicule en vue de la détermination de l'état de déplacement, à l'arrêt ou en roulage, du dit véhicule.

Ce dispositif trouve plus spécifiquement son application dans le cadre de systèmes de surveillance comportant des boîtiers électroniques 1 montés sur chacune des roues 2 de véhicules 3, intégrant des capteurs dédiés à la mesure de paramètres, tels que pression et/ou température des pneumatiques équipant ces roues 2, et destinés à informer le conducteur de toute variation anormale du paramètre mesuré.

Dans le cadre de cette application, le dispositif est adapté pour utiliser une antenne 4 consistant en une self-inductance, dont est classiquement équipé chaque boîtier électronique 1 en vue de transmissions basses fréquences LF, de l'ordre de 125KHz. Le dispositif a pour fonction de mesurer la différence de potentiel aux bornes de cette self-inductance 4, et de déduire des résultats de ces mesures l'état de déplacement du véhicule 3, en assimilant :
- l'absence de variations de la différence de potentiel mesurée à une absence de rotation de la roue 2, et par conséquent à un état à l'arrêt du véhicule 3,
- et une variation cyclique de la différence de potentiel mesurée à une rotation de la roue 2, et donc à un état de roulage du véhicule 3.

Un capteur magnétique 4 monté sur une roue 2 de véhicule 3 détecte, en effet, les variations du champ magnétique global régnant autour de ce capteur, composé du champ magnétique terrestre additionné du champ magnétique environnemental pouvant notamment résulter de la présence d'équipements électriques ou magnétiques embarqués dans le véhicule, et :
- en l'absence de rotation de la roue 2, ce champ magnétique global « vu » par le capteur magnétique 4 est sensiblement constant, d'où une absence de variations de la différence de potentiel aux bornes du dit capteur magnétique,
- par contre, lors de la rotation de la roue 2, le capteur magnétique 4 se déplace selon une trajectoire circulaire, de sorte que ce capteur 4 détecte un champ magnétique variable et que la différence de potentiel mesurée aux bornes du dit capteur présente des variations cycliques correspondantes.

Il est à noter que, l'antenne LF 4 constitue généralement le capteur magnétique le plus économique du fait que cette antenne 4 est usuellement intégrée dans les boîtiers électroniques 1 constitutifs des systèmes de surveillance et/ou de mesure de paramètres.

Toutefois, il peut être envisagé d'utiliser tout autre type de capteur magnétique tel que, par exemple, un capteur à effet Hall, une bobine ferrite, une bobine plate...

En vue de la mesure et du traitement de la différence de potentiel aux bornes de l'antenne 4, le dispositif comporte, en premier lieu, un module d'amplification 6 et un module de mise en forme 7 incorporant un comparateur, de sorte que, tel que représenté à la figure 3, lors de la rotation de la roue 2 :
- le signal 3a aux bornes du capteur magnétique 4 est un signal sinusoïdal de très faible amplitude,
- le signal 3b en sortie du module d'amplification 6 est un signal sinusoïdal de même période que le signal précédent mais d'amplitude supérieure à celle du dit signal 3a,
- et le signal 3c en sortie du module de mise en forme 7 est un signal carré de même période que les signaux sinusoïdaux 3a et 3b.

Le dispositif comporte, en outre, une unité de calcul 8 vers laquelle est délivré le signal 3c mis en forme, programmée pour :
- fournir, tel que précité, une information soit de véhicule à l'arrêt soit de véhicule en roulage en fonction du caractère périodique ou non du signal reçu,
- fournir, en outre, lorsque le véhicule se déplace, une information représentative de la vitesse de rotation de la roue 2 portant le capteur magnétique 4, fonction directe de la période du signal carré 3c reçu.

En dernier lieu, le véhicule 3 peut également comporter, tel que représenté à la figure 1, des aimants permanents ou électromagnétiques 10 fixés sur la carrosserie au niveau des passages de roues 11, de sorte que le champ magnétique créé par chacun de ces aimants 10 est détecté par le capteur magnétique 4 monté sur la roue 2 correspondante, augmentant le champ magnétique global détecté par le dit capteur, et par conséquent l'amplitude du signal sinusoïdal en sortie du module d'amplification 6.

Moyennant de simples adaptations logicielles des unités de calcul 8 équipant classiquement les boîtiers électroniques 1 des systèmes de surveillance et/ou de mesure de paramètres de fonctionnement de véhicules automobiles 3, le dispositif permet donc, non seulement de déterminer de façon rapide et précise l'état de déplacement de ces véhicules 3, mais également, lorsque les véhicules se déplacent, de fournir une information fiable concernant la vitesse de déplacement des dits véhicules.

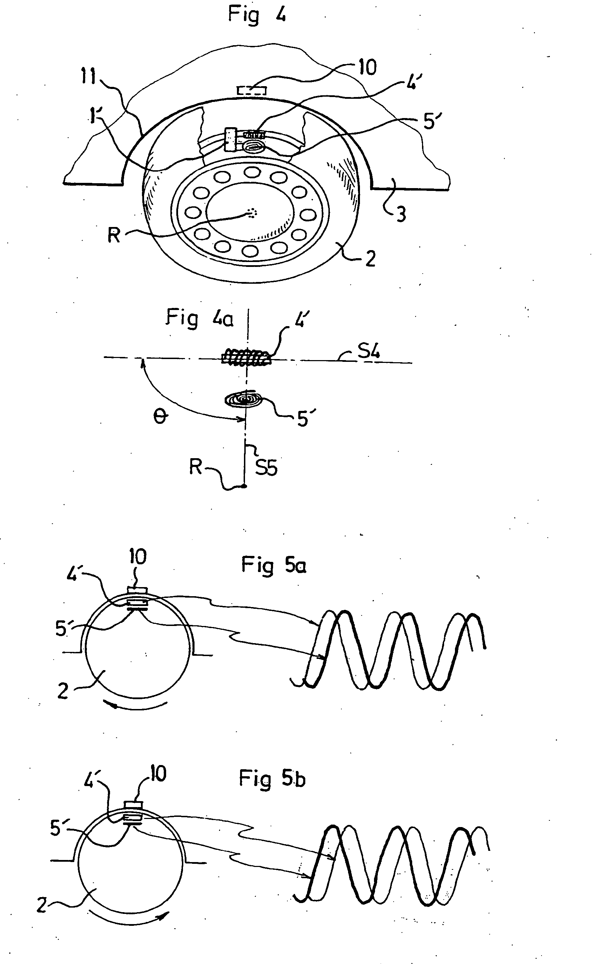

La figure 4 représente un dispositif selon l'invention permettant, outre la détermination de l'état de déplacement d'un véhicule, de localiser (position droite ou gauche) les roues de ce véhicule.

Ce dispositif comprend, en premier lieu, deux capteurs magnétiques 4', 5' adaptés pour pouvoir être intégrés dans un même boîtier électronique 1', et disposés de façon que leurs axes de sensibilité maximale S4, S5 s'étendent dans un même plan perpendiculaire à l'axe de rotation R de la roue 2, et soient décalés l'un par rapport à l'autre d'un angle prédéterminé θ de préférence égal à 90°.

A cet effet, et selon l'exemple de réalisation représenté aux figures 4 et 4a, ces deux capteurs magnétiques 4', 5', d'une part, sont axés sur un même axe radial par rapport à l'axe de rotation R de la roue 2, et d'autre part, consistent en :
- une bobine 4' comportant un noyau en fer doux, positionnée de façon que l'axe longitudinal du dit noyau, formant l'axe de sensibilité maximale S4 de la dite bobine, coïncide avec un axe tangent par rapport à un cercle axé sur l'axe de rotation R de la roue 2,
- et une bobine plate 5' formée d'un enroulement plan positionné de façon que l'axe longitudinal du dit enroulement formant l'axe de sensibilité maximale S5 de la dite bobine, coïncide avec l'axe radial précité.

Ainsi disposée, lors de la rotation de la roue 2, chacune de ces bobines 4', 5' présente, entre ces deux bornes, une différence de potentiel variable selon une fonction sinusoïdale de période égale à la période de rotation de la dite roue.

En outre, les deux bobines 4', 5' étant positionnées, selon l'invention, de façon que leurs axes de sensibilité maximale S4, S5 soient orthogonaux, les signaux représentatifs de la différence de potentiel aux bornes des dites bobines sont déphasés l'un par rapport à l'autre d'un angle égal à (+ ou -) 90°, de sorte que, tel que représenté aux figures 5a et 5b, l'analyse de ce déphasage permet de déterminer le sens de rotation de la roue 2.

Tel que pour le mode de réalisation de la figure 1, en vue de la mesure et du traitement de la différence de potentiel aux bornes de chaque bobine 4', 5' le dispositif comporte, en premier lieu, un module d'amplification 6 et un module de mise en forme 7 identiques à ceux décrits ci-dessus en référence à la figure 2.

Ce dispositif comporte, en outre, une unité de calcul vers laquelle sont délivrés les signaux mis en forme, programmée pour :
- déterminer, tel que précité, à partir de l'analyse du déphasage entre les deux signaux sinusoïdaux, le sens de rotation de la roue 2,
- et déduire de ce sens de rotation et du sens de déplacement du véhicule 3, déterminé par ailleurs par tout procédé connu en soi, la position droite ou gauche de la roue 2.

En dernier lieu, et selon cette variante de réalisation, le véhicule 3 peut également comporter, tel que représenté à la figure 4, des aimants permanents ou électromagnétiques 10 fixés sur la carrosserie au niveau des passages de roues 11.

Cette variante de réalisation selon l'invention permet donc, moyennant d'intégrer deux simples capteurs magnétiques 4', 5' de faible coût dans chaque boîtier électronique 1' embarqué sur une roue 2 de véhicule 3, de localiser très rapidement, après quelques tours de roue 2, la position droite ou gauche de la dite roue.

## Revendications

1. Procédé de détermination de l'état de déplacement, à l'arrêt ou en roulage, d'un véhicule (3), consistant à équiper au moins une des roues (2) du dit véhicule d'un capteur magnétique (4 ; 4') présentant un axe de sensibilité maximale (S4) et à mesurer un signal aux bornes du capteur magnétique (4 ; 4') de façon à délivrer un signal représentatif des variations des valeurs du champ magnétique détectées par le dit capteur magnétique, lors du déplacement du véhicule, et à fournir soit une information à l'arrêt en l'absence de variations du signal délivré, soit une information de véhicule en roulage lors d'une variation cyclique du signal,
le dit procédé étant **caractérisé en ce que**:
• on équipe la roue (2) d'un second capteur magnétique (5'), le dit second capteur magnétique et le premier capteur magnétique (4') étant positionnés de façon que leurs axes de sensibilité maximale (S4, S5) s'étendent dans un plan sécant par rapport à l'axe de rotation (R) de la roue (2), et soient décalés l'un par rapport à l'autre, dans ce plan sécant, d'un angle prédéterminé θ,
et, lors des déplacements du véhicule selon un sens de déplacement donné :
• on mesure le signal généré par la variation du champ magnétique aux bornes de chacun des deux capteurs magnétiques (4', 5'), de façon à délivrer deux signaux périodiques déphasés l'un par rapport à l'autre d'une valeur angulaire égale à (+ ou -) θ, représentatifs chacun des variations cycliques des valeurs du champ magnétique détectées par les dits capteurs magnétiques pendant un tour de roue (2) lors du déplacement du véhicule,
• on détermine à partir de ce déphasage le sens de rotation de la roue (2),
• et on déduit de ce sens de rotation et du sens de déplacement du véhicule (3), la localisation de la position droite ou gauche de la roue (2).

2. Procédé selon la revendication 1 **caractérisé en ce que**, lors des déplacements du véhicule (3), on mesure la période du signal cyclique représentatif des variations des valeurs du champ magnétique détectées par le capteur magnétique (4 ; 4'), et on utilise cette donnée pour le calcul de la vitesse de rotation de la roue (2) équipée du dit capteur magnétique.

3. Procédé selon l'une des revendications 1 ou 2 destiné à un véhicule (3) doté de roues (2) équipées d'un boîtier électronique (1) de surveillance et/ou de mesure d'un paramètre, intégrant une antenne basse fréquence (4) constituée d'une inductance, **caractérisé en ce que** l'on délivre les informations de l'état de déplacement du véhicule (3) à partir de mesures du signal aux bornes de la dite inductance formant antenne.

4. Procédé selon la revendication 1 **caractérisé en ce que** l'on positionne les deux capteurs magnétiques (4', 5') de façon que leurs axes de sensibilité maximale (S4, S5) s'étendent orthogonalement l'un par rapport à l'autre, dans un plan orthogonal par rapport à l'axe de rotation (R) de la roue (2).

5. Procédé selon la revendication 1 **caractérisé en ce que** l'on détermine l'état de déplacement du véhicule (3) en mesurant alternativement, pendant des périodes de temps prédéterminées, le signal aux bornes soit du premier capteur magnétique (4') soit du second capteur magnétique (5').

6. Dispositif de détermination de l'état de déplacement, à l'arrêt ou en roulage, d'un véhicule (3), le dit dispositif comportant, montés sur au moins une des roues (2) du dit véhicule :
• un capteur magnétique (4 ; 4') présentant un axe de sensibilité maximale (S4),
• des moyens (6, 7) de mesure d'un signal aux bornes du capteur magnétique (4), aptes à délivrer un signal représentatif des variations des valeurs du champ magnétique détectées par le dit capteur magnétique,
• et une unité de calcul (8) programmée pour fournir une information de véhicule à l'arrêt en l'absence de variations du signal délivré par les moyens de mesure (6, 7), et une information de véhicule en roulage lors d'une variation cyclique du dit signal.
le dit dispositif étant **caractérisé en ce qu'**il comporte en outre:
• un second capteur magnétique (5'), monté sur la roue (2), le dit second capteur magnétique et le premier capteur magnétique (4') étant positionnés de façon que leurs axes de sensibilité maximale (S4, S5) s'étendent dans un plan sécant par rapport à l'axe de rotation (R) de la roue (2), et soient décalés l'un par rapport à l'autre, dans ce plan sécant, d'un angle prédéterminé θ,
• les dits moyens de mesure (6 ,7) étant disposés aux bornes de chacun des deux capteurs magnétiques (4', 5'), de façon à délivrer, lors des déplacements du véhicule ( 3), deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue (2),
• et l'unité de calcul (8) est programmée pour déterminer, à partir du déphasage entre les deux signaux périodiques, le sens de rotation de la roue (2), et pour déduire de ce sens de rotation et du sens de déplacement du véhicule (3), la localisation de la position droite ou gauche de la roue (2).

7. Dispositif selon la revendication 6 **caractérisé en ce que** l'unité de calcul (8) est programmée, lors des déplacements du véhicule (3), pour mesurer la période du signal cyclique délivré par les moyens de mesure (6, 7), et pour calculer, à partir de cette donnée, la vitesse de rotation de la roue (2) équipée du capteur magnétique (4 ; 4').

8. Dispositif selon l'une des revendications 6 ou 7 destiné à des véhicules (3) dotés de roues (2) équipées d'un boîtier électronique (1) de surveillance et/ou de mesure d'un paramètre, intégrant une antenne basse fréquence (4) constituée d'une inductance, **caractérisé en ce que** les moyens de mesure (6, 7) sont disposés de façon à mesurer un signal aux bornes de la dite inductance formant antenne.

9. Dispositif selon la revendication 6 **caractérisé en ce que** les deux capteurs magnétiques (4', 5') sont positionnés de façon que leurs axes de sensibilité maximale (S4, S5) s'étendent orthogonalement l'un par rapport à l'autre, dans un plan orthogonal par rapport à l'axe de rotation de la roue (2).

## Claims

1. Method for determining the state of travel, whether stationary or moving along, of a vehicle (3), consisting in equipping at least one of the wheels (2) of said vehicle with a magnetic sensor (4; 4') having an axis of maximum sensitivity (S4), and in measuring a signal at the terminals of the magnetic sensor (4; 4') so as to deliver a signal representative of the variations in the values of the magnetic field detected by said magnetic sensor when the vehicle is moving, and in providing either information that the vehicle is stationary if there are no variations in the signal delivered, or information that the vehicle is moving along when there is a cyclic variation in said signal,
said method **characterised in that**
• the wheel (2) is equipped with a second magnetic sensor (5'), said second magnetic sensor and the first magnetic sensor (4') being positioned in such a way that their axes of maximum sensitivity (S4, S5) lie in a plane that is secant to the axis of rotation (R) of the wheel (2) and are offset from one another, in this secant plane, by a predetermined angle θ,
and, as the vehicle moves in a given direction of travel,:
• the signal generated by the variation in the magnetic field is measured at the terminals of each of the two magnetic sensors (4', 5') so as to deliver two periodic signals phase-shifted with respect to one another by an angular value equal to (+ or -) θ, each one representative of the cyclic variations in the values of the magnetic field detected by said magnetic sensors during one revolution of the wheel (2) whilst the vehicle is moving,
• this phase shift is used to determine the direction of rotation of the wheel (2),
• and from this direction of rotation and from the direction of travel of the vehicle (3), the location of the wheel (2), whether positioned on the right or on the left, is deduced.

2. Method according to claim 1, **characterised in that**, when the vehicle (3) is moving, the period of the cyclic signal representative of the variations in the values of the magnetic field which are detected by the magnetic sensor (4; 4') is measured and this data item is used to calculate the rotational speed of the wheel (2) equipped with said magnetic sensor.

3. Method according to one of claims 1 or 2, intended for a vehicle (3) provided with wheels (2) which are equipped with an electronic unit (1) for monitoring and/or measuring a parameter, incorporating a low-frequency antenna (4) consisting of an inductor, **characterised in that** the information regarding the state of travel of the vehicle (3) is delivered on the basis of measurements of the signal at the terminals of said antenna-forming inductor.

4. Method according to claim 1, **characterised in that** the two magnetic sensors (4', 5') are positioned in such a way that their axes of maximum sensitivity (S4, S5) lie orthogonal to one another, in a plane orthogonal to the axis of rotation (R) of the wheel (2).

5. Method according to claim 1, **characterised in that** the state of travel of the vehicle (3) is determined by alternately measuring, during predetermined periods of time, the signal at the terminals either of the first magnetic sensor (4') or of the second magnetic sensor (5').

6. Device for determining the state of travel, whether stationary or moving along, of a vehicle (3), **characterised in that** said device comprises, mounted on at least one of the wheels (2) of said vehicle:
• a magnetic sensor (4; 4') having an axis of maximum sensitivity (S4),
• means (6, 7) for measuring a signal at the terminals of the magnetic sensor (4), these means being able to deliver a signal representative of the variations in the values of the magnetic field detected by said magnetic sensor,
• and a calculation unit (8) programmed to provide information that the vehicle is stationary if there are no variations in the signal delivered by the measurement means (6, 7), and information that the vehicle is moving along when there is a cyclic variation in said signal
said device **characterised in that** it comprises in addition:
• mounted on the wheel (2), a second magnetic sensor (5'), said second magnetic sensor and the first magnetic sensor (4') being positioned in such a way that their axes of maximum sensitivity (S4, S5) lie in a plane that is secant to the axis of rotation (R) of the wheel (2) and are offset from one another, in this secant plane, by a predetermined angle θ,
• the measurement means (6, 7) are arranged at the terminals of each of the two magnetic sensors (4', 5') so as to deliver, as the vehicle (3) moves along, two periodic signals phase-shifted with respect to one another by an angular value equal to (+ or -) θ, each one representative of variations in the values of the magnetic field detected by said magnetic sensors during one revolution of the wheel (2),
• and the calculation unit (8) is programmed to determine, from the phase shift between the two periodic signals, the direction of rotation of the wheel (2) and, from this direction of rotation and from the direction of travel of the vehicle (3), to deduce the position, on the right or on the left, of the wheel (2).

7. Device according to claim 6, **characterised in that** the calculation unit (8) is programmed, as the vehicle (3) moves along, to measure the period of the cyclic signal delivered by the measurement means (6, 7) and to calculate, from this data item, the rotational speed of the wheel (2) equipped with the magnetic sensor (4; 4').

8. Device according to one of claims 6 or 7, intended for vehicles (3) provided with wheels (2) which are equipped with an electronic unit (1) for monitoring and/or measuring a parameter, incorporating a low-frequency antenna (4) consisting of an inductor, **characterised in that** the measurement means (6, 7) are arranged in such a way as to measure a signal at the terminals of said antenna-forming inductor.

9. Device according to claim 6, **characterised in that** the two magnetic sensors (4', 5') are positioned in such a way that their axes of maximum sensitivity (S4, S5) lie orthogonal to one another, in a plane orthogonal to the axis of rotation of the wheel (2).

## Patentansprüche

1. Verfahren zur Bestimmung des Bewegungszustands, im Stillstand oder im Fahren, eines Fahrzeugs (3), welches darin besteht, mindestens eines der Räder (2) des Fahrzeugs mit einem Magnetsensor (4; 4') auszustatten, der eine Achse der maximalen Empfindlichkeit (S4) aufweist, und ein Signal an den Klemmen des Magnetsensors (4; 4') zu messen, um ein Signal abzugeben, das für die Schwankungen der Werte des Magnetfeldes, die vom Magnetsensor bei der Bewegung des Fahrzeugs erfasst werden, kennzeichnend ist, und entweder eine Information im Stillstand mangels Schwankungen des abgegebenen Signals oder eine Information vom Fahrzeug im Fahren während einer zyklischen Schwankung des Signals zu liefern,
wobei das Verfahren **dadurch gekennzeichnet ist, dass**:
• das Rad (2) mit einem zweiten Magnetsensor (5') ausgestattet wird, wobei der zweite Magnetsensor und der erste Magnetsensor (4') so angeordnet werden, dass sich ihre Achsen der maximalen Empfindlichkeit (S4, S5) in einer Schnittebene in Bezug auf die Drehachse (R) des Rads (2) erstrecken und zueinander in dieser Schnittebene um einen vorausbestimmten Winkel θ versetzt sind,
und bei Bewegungen des Fahrzeugs gemäß einer gegebenen Bewegungsrichtung:
• das Signal gemessen wird, das durch die Schwankung des Magnetfeldes an den Klemmen von jedem der beiden Magnetsensoren (4', 5') erzeugt wird, um zwei periodische Signale abzugeben, die zueinander um einen Winkelwert, der gleich (+ oder -) θ ist, phasenverschoben sind, und die jeweils für die zyklischen Schwankungen der Werte des Magnetfeldes, die von den Magnetsensoren während einer Umdrehung des Rads (2) bei der Bewegung des Fahrzeugs erfasst werden, kennzeichnend sind,
• ausgehend von dieser Phasenverschiebung die Drehrichtung des Rads (2) bestimmt wird,
• und von dieser Drehrichtung und von der Bewegungsrichtung des Fahrzeugs (3) die Lokalisierung der rechten oder linken Position des Rads (2) abgeleitet wird.

2. Verfahren nach Anspruch 1, **dadurch gekennzeichnet, dass** bei den Bewegungen des Fahrzeugs (3) die Periode des zyklischen Signals gemessen wird, das für die Schwankungen der Werte des Magnetfelds, die vom Magnetsensor (4; 4') erfasst werden, kennzeichnend ist, und dass diese Angabe für die Berechnung der Drehgeschwindigkeit des Rads (2), das mit dem Magnetsensor ausgestattet ist, verwendet wird.

3. Verfahren nach einem der Ansprüche 1 oder 2, das für ein Fahrzeug (3) bestimmt ist, das mit Rädern (2) versehen ist, die mit einem Elektronikgehäuse (1) zur Überwachung und/oder Messung eines Parameters ausgestattet sind, das eine Niedrigfrequenzantenne (4) mit einschließt, die von einer Drosselspule gebildet wird, **dadurch gekennzeichnet, dass** die Informationen vom Bewegungszustand des Fahrzeugs (3) ausgehend von Messungen des Signals an den Klemmen der Drosselspule, die die Antenne bildet, abgegeben werden.

4. Verfahren nach Anspruch 1, **dadurch gekennzeichnet, dass** die beiden Magnetsensoren (4', 5') so angeordnet werden, dass sich ihre Achsen der maximalen Empfindlichkeit (S4, S5) senkrecht zueinander erstrecken, und zwar in einer in Bezug auf die Drehachse (R) des Rads (2) senkrechten Ebene.

5. Verfahren nach Anspruch 1, **dadurch gekennzeichnet, dass** der Bewegungszustand des Fahrzeugs (3) bestimmt wird, indem während vorausbestimmter Zeitperioden abwechselnd das Signal an den Klemmen entweder des ersten Magnetsensors (4') oder des zweiten Magnetsensors (5') gemessen wird.

6. Vorrichtung zur Bestimmung des Bewegungszustands, im Stillstand oder im Fahren, eines Fahrzeugs (3), wobei die Vorrichtung Folgendes, das auf mindestens einem der Räder (2) des Fahrzeugs befestigt ist, umfasst:
• einen Magnetsensor (4; 4'), der eine Achse der maximalen Empfindlichkeit (S4) aufweist,
• Mittel (6, 7) zur Messung eines Signals an den Klemmen des Magnetsensors (4), die imstande sind, ein Signal abzugeben, das für die Schwankungen der Werte des Magnetfeldes, die vom Magnetsensor erfasst werden, kennzeichnend ist,
• und eine Recheneinheit (8), die programmiert ist, um eine Information vom Fahrzeug im Stillstand mangels Schwankungen des Signals, das von den Mitteln zur Messung (6, 7) abgegeben wird, und eine Information vom Fahrzeug im Fahren während einer zyklischen Schwankung des Signals zu liefern,
wobei die Vorrichtung **dadurch gekennzeichnet ist, dass** sie des Weiteren Folgendes umfasst:
• einen zweiten Magnetsensor (5'), der auf dem Rad (2) befestigt ist, wobei der zweite Magnetsensor und der erste Magnetsensor (4') so angeordnet werden, dass sich ihre Achsen der maximalen Empfindlichkeit (S4, S5) in einer Schnittebene in Bezug auf die Drehachse (R) des Rads (2) erstrecken und zueinander in dieser Schnittebene um einen vorausbestimmten Winkel θ versetzt sind,
• die Mittel zur Messung (6, 7), die an den Klemmen von jedem der beiden Magnetsensoren (4', 5') angeordnet sind, um bei den Bewegungen des Fahrzeugs (3) zwei periodische Signale abzugeben, die zueinander um einen Winkelwert, der gleich (+ oder -) θ ist, phasenverschoben sind, und die jeweils für die Schwankungen der Werte des Magnetfeldes, die von den Magnetsensoren während einer Umdrehung des Rads (2) erfasst werden, kennzeichnend sind,
• und die Recheneinheit (8), die programmiert ist, um ausgehend von der Phasenverschiebung zwischen den beiden periodischen Signalen die Drehrichtung des Rads (2) zu bestimmen, und um von dieser Drehrichtung und von der Bewegungsrichtung des Fahrzeugs (3) die Lokalisierung der rechten oder linken Position des Rads (2) abzuleiten.

7. Vorrichtung nach Anspruch 6, **dadurch gekennzeichnet, dass** die Recheneinheit (8) während der Bewegungen des Fahrzeugs (3) programmiert ist, um die Periode des zyklischen Signals, das von den Mitteln zur Messung (6, 7) abgegeben wird, zu messen, und um ausgehend von dieser Angabe die Drehgeschwindigkeit des Rads (2), das mit dem Magnetsensor (4; 4') ausgestattet ist, zu berechnen.

8. Vorrichtung nach einem der Ansprüche 6 oder 7, die für Fahrzeuge (3) bestimmt ist, die mit Rädern (2) versehen sind, die mit einem Elektronikgehäuse (1) zur Überwachung und/oder Messung eines Parameters ausgestattet sind, das eine Niedrigfrequenzantenne (4) mit einschließt, die von einer Drosselspule gebildet wird, **dadurch gekennzeichnet, dass** die Mittel zur Messung (6, 7) angeordnet sind, um ein Signal an den Klemmen der Drosselspule, die die Antenne bildet, zu messen.

9. Vorrichtung nach Anspruch 6, **dadurch gekennzeichnet, dass** die beiden Magnetsensoren (4', 5') so angeordnet sind, dass sich ihre Achsen der maximalen Empfindlichkeit (S4, S5) senkrecht zueinander erstrecken, und zwar in einer in Bezug auf die Drehachse des Rads (2) senkrechten Ebene.
